# EUROPEAN PATENT APPLICATION

(11) **EP 1 895 353 A1**
(43) Date of publication of application: **05.03.2008**
(21) Application number: 06119706.7
(22) Date of filing: 29.08.2006
(51) Int. Cl.: G02F 1/13357, G02B 6/00

(54) **Improved lighting design for LCDs**

(71) Applicant: Topson Optoelectronics Semi-conductor Co., Ltd., Gueishan Township, Taoyuan County (TW)
(72) Inventor: Chan, Tsung-Wen, Taipei City (TW)
(74) Representative: Viering, Jentschura & Partner

(57) **Abstract**

An improved lighting design for LCDs is disclosed. The improved lighting design of the present invention comprises an LCD, an LED module (2) and a reflective prism module (3). The LED module is disposed behind the LCD and comprises a plurality of LED units mounted on a flat panel. Each of the LED units comprises a light-generating point (211), a light-transmissive hole (212) and a light-guiding lens (213). The reflective prism module comprises a plurality of prisms (31) disposed on a base panel and behind the LED module, when the LED units are turned on, light is generated by the light-generating points and propagates rearwardly toward the prisms. Then the light is reflected forwardly by the reflective surfaces of the prisms. Next, the light passes through the light-transmissive holes and then reaches the LCD in an evenly distributed manner.

## Description

### BACKGROUND OF THE INVENTION

### 1. Field of the invention

The invention generally relates to an improved lighting design for LCDs. More particularly, the invention relates to an improved lighting design by which light emitted from LEDs may be evenly distributed on an LCD and so that the light and pictures shown on the LCD may be brighter and have a higher color saturation level and that the manufacturing process and maintenance may be simplified through modular parts.

### 2. Description of the prior art

As of now, white-light CCFLs (cold cathode fluorescent lamps) have been used as the main lighting source for LCDs. CCFLs are disposed behind an LCD so that light emitted from CCFLs may reach the LCD. As the size of LCD gets bigger, more CCFLs and electric circuits are needed. However, CCFLs have the following four disadvantages:
1. CCFLs can not provide evenly distributed light. When a plurality of CCFLs are used for an LCD, they still can not provide evenly distributed light; it is particular so when more CCFLs are used for an LCD with a larger size.
2. CCFLs have a relatively shorter service life. Their brightness would start to decrease after 4000 to 600 hours of use and they are not easy to replace. This substantially shortens the service life of the corresponding LCD.
3. CCFLs have a relatively lower color saturation level and their color temperature is around 4800 degree K. Hence, CCFLs can only reach 80% of the color range specified by the NTSC. Also, CCFLs are particularly weak in the red color performance, and this renders CCFLs quite disadvantageous (such as when being used for lab instruments and in particular applications).
4. CCFLs consume more electricity. Also, the tube of a CCFL contains a slight amount of mercury, which can pollute our environment.

Whence, other types of lighting sources have been used for LCDs. As of now, LEDs have been used for this purpose. LEDs have been used for smaller-sized LCDs (such as cell phones and PDAs) for a while. In the past few years, the brightness of LCD has been greatly enhanced. In addition, because LCDs are lightweight, sturdy and responsive and have a comparatively longer service life, they have become the preferred choice for larger-sized LCDs.

When LEDs are used as the lighting source for an LCD, they are usually disposed on one side or both sides of the LCD. When the LEDs are turned on, light emitted from the LEDs may reach the LCD. However, light emitted from the LEDs is not evenly distributed on the LCD and is usually concentrated in a particular area.

Also, if a part of the LCD malfunctions, the whole LCD must be replaced and this costs more money and generates additional burden on our environment.

To eliminate the disadvantages of the lighting sources of the prior art, the inventor has put in a lot of effort in the subject and has successfully come up with the improved lighting design (in which a plurality of LEDs are used and through which light may be evenly distributed on an LCD) for LCDs of the present invention.

### SUMMARY OF THE INVENTION

The main object of the present invention is to provide an improved lighting design for LCDs by which light emitted from LEDs may be evenly distributed on an LCD and so that the light and pictures shown on the LCD may be brighter and have a higher color saturation level.

Another object of the present invention is to provide an improved lighting design for LCDs by which LED modules and reflective prism modules may be made into a standard size so that several LED modules and reflective prism modules may be put together to be used for a larger LCD so as to simplify the manufacturing process and enhance the conforming rate.

A third object of the present invention is to provide an improved lighting design for LCDs by which only a part needs to be replaced in the case that there is a malfunction in the lighting parts of a larger LCD, which includes several LED modules and reflective prism modules, so as to simplify the maintenance.

The improved lighting design of the present invention comprises an LCD, an LED module and a reflective prism module. The LED module is disposed behind the LCD and comprises a plurality of LED units mounted on a flat panel. Each of the LED units comprises a light-generating point, a light-transmissive hole and a light-guiding lens. The light-generating points and the light-transmissive holes are disposed on the inner side of the LED module and the light-guiding lenses are disposed on the outer side of the LED module. The reflective prism module comprises a plurality of prisms disposed on a base panel and behind the LED module. When the LED units are turned on, light is generated by the light-generating points and propagates rearwardly toward the prisms. Then the light is reflected forwardly by the reflective surfaces of the prisms. Next, the light passes through the light-transmissive holes and then reaches the LCD in an evenly distributed manner.

### BRIEF DESCRIPTION OF THE DRAWINGS

The drawings disclose an illustrative embodiment of the present invention which serves to exemplify the various advantages and objects hereof, and are as follows:
Fig. 1 is a perspective view of the LED module and the reflective prism module of the present invention.
Fig. 2 is a top view of the LED module of the present invention, showing the light-generating points and light-transmissive holes.
Fig. 3 is a sectional view of the improved lighting design of the present invention, showing how the improved lighting design works.
Fig. 4 is a perspective view of a larger LCD, which may be made of several of the LED modules and the reflective prism modules of the present invention.
Fig. 5 is a top view of an LED module of the present invention, with the LED units mounted in an aligned manner.
Fig. 6 is a top view of another embodiment of the LED module of the present invention, with the connective edges and with the LED units mounted in an aligned manner.
Fig. 7 is a top view of an LED module of the present invention, with the LED units mounted in a non-aligned manner.

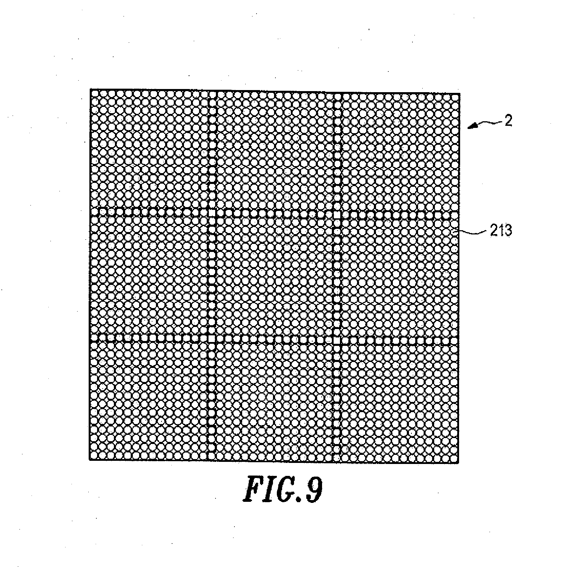

Fig. 8 is a top view of another embodiment of the LED module of the present invention, with the connective edges and with the LED units mounted in a non-aligned manner.
Fig. 9 is a top view showing how two or more flat panels may be connected through the connective edges.

### Detailed description of the preferred embodiment

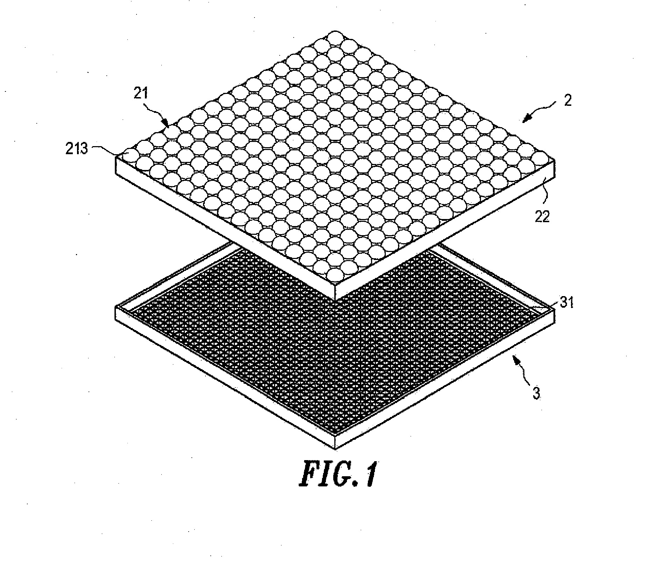

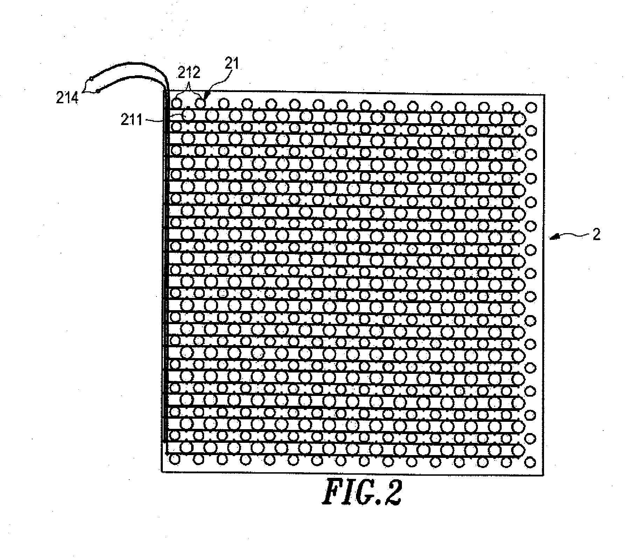

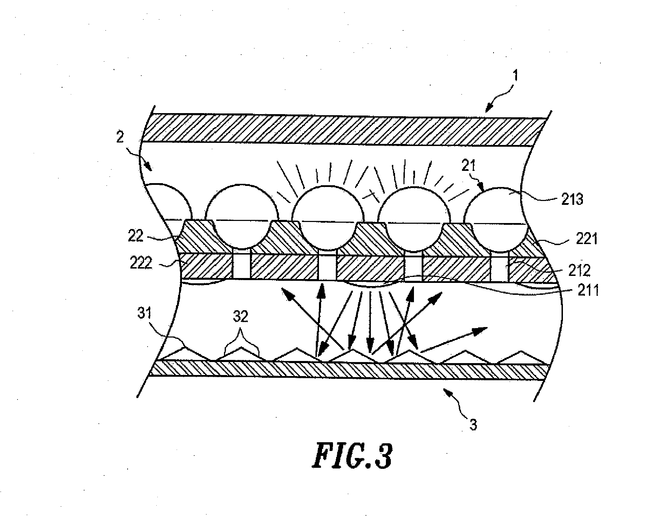

I As showed from Fig. 1 to 3, the improved lighting design for LCDs of the present invention comprises an LCD 1, an LED module 2 and a reflective prism module 3. The LED module 2 is disposed behind the LCD 1, and the reflective prism module 3 is disposed behind the LED module 2. Light generated by the LED module 2 may propagate rearwardly toward the reflective prism module 3 and then is reflected forwardly onto the LCD 1 so that the light and pictures shown on the LCD 1 may be brighter and more evenly distributed.

The LED module 2 comprises a plurality of LED units 21. The LED units 21 are mounted on a flat panel 22, and each of them comprises a light-generating point 211, a light-transmissive hole 212 and a light-guiding lens 213. The flat panel 22 comprises an outer board 221 and a circuit board 222. The light-generating points 211 are disposed on the inner side of the circuit board 222 so that light may propagate rearwardly. Also, electric wires 214 are disposed on the circuit board 222 so as to provide electricity to the LED units 21. The light-transmissive holes 212 are provided in the inner wall of the circuit board 222; the light-guiding lenses 213 are provided on the outer side of the outer board 221 and each of these lenses 213 is in alignment with the corresponding light-transmissive hole 212. Each of the light-guiding lenses 213 has two concave surfaces, and the inner potion of each of the light-guiding lenses 213 is embedded in the corresponding light-transmissive hole 212. The reflective prism module 3 comprises a plurality of prisms 31 disposed on a base panel, and each of these prisms 31 may face and be in alignment with a corresponding LED unit 21.

When the LED units 21 are turned on, light is generated by the light-generating points 211 and propagates rearwardly toward the prisms 31. Then the light is reflected forwardly by the reflective surfaces 32 of the prisms 31. Next, the light passes through the light-transmissive holes 212 and then reaches the LCD 1 in an evenly distributed manner. Also, because each of the light-guiding lenses 213 has two concave surfaces, the light may be spread out in a bigger area and in a more evenly distributed manner. To maximize the luminance, the reflective surfaces 32 of each prism 31 is in alignment with the corresponding the light-transmissive hole 212. In addition, the reflective surfaces 32 of each prism 31 may be made of highly reflective material, and each of the light-guiding lenses 213 may be made of highly light-transmissive material. However, these materials are not included in the scope of the present invention.

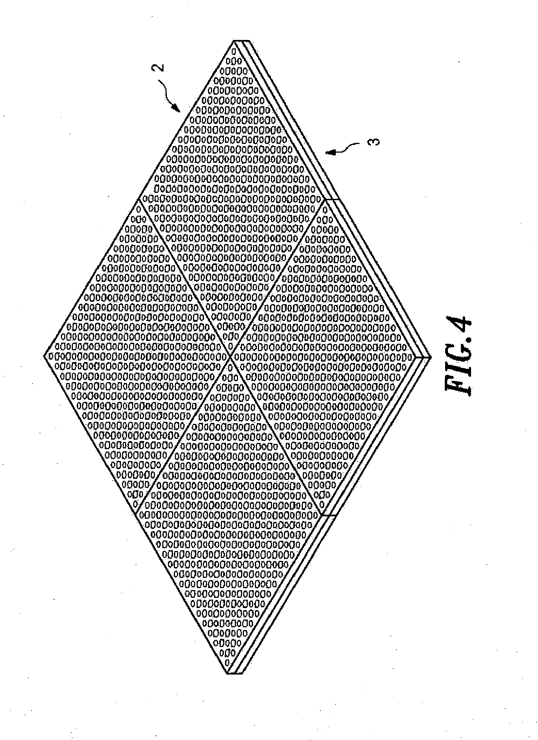

As shown in Fig. 4, to make the manufacturing and maintenance of the LCDs easier, either of the LED module 2 and the reflective prism module 3 may be made into a standard size. If a larger LCD is needed, several of the LED modules 2 and the reflective prism modules 3 may then be put together.

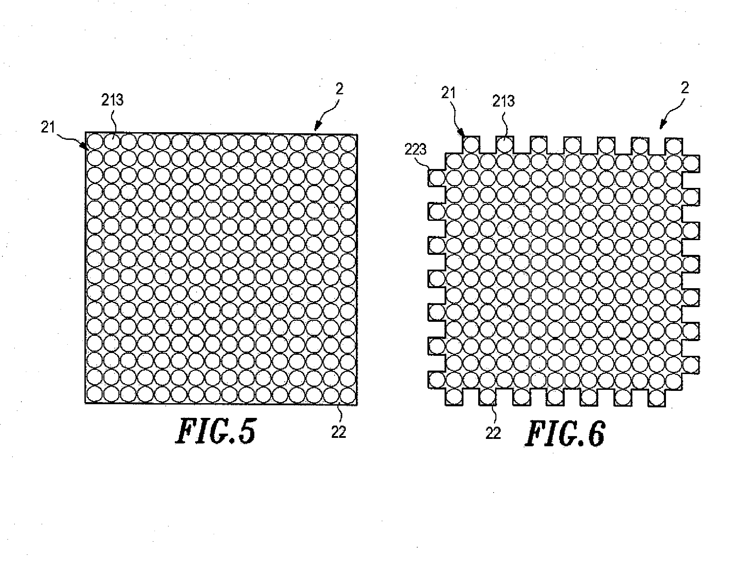

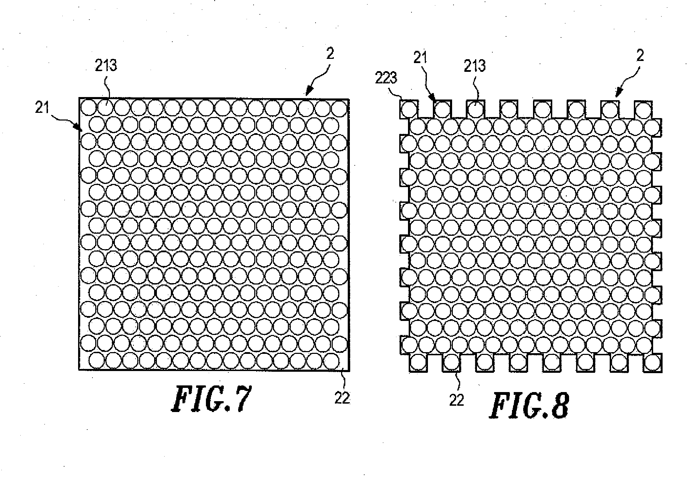

As illustrated in Figs. 5 and 7, the LED units 21 may be mounted on the flat panel 22 in an aligned manner or a non-aligned manner. In the case that the non-aligned manner is adopted, more LED units 21 may be mounted on a flat panel 22 so that the light and pictures shown on the LCD may be brighter and have a higher color saturation level.

When two or more flat panels 22 are connected, the evenness in the light distribution may be adversely affected. As shown in Figs. 6, 7 and 9, connective edges 223 may be adopted on each flat panel 22 so that two or more flat panels 22 may be connected more securely and so as to eliminate the aforesaid unevenness in the light distribution.

Also, each of the light-generating points 211 may be a high-brightness white-light unit or a unit that emits red light, green light and blue light or a unit that emits a plurality of colors.

Although a preferred embodiment of the present invention has been described in detail hereinabove, it should be understood that the preferred embodiment is to be regarded in an illustrative manner rather than a restrictive manner, and all variations and modifications of the basic inventive concepts herein taught still fall within the scope of the present invention.

Many changes and modifications in the above described embodiment of the invention can, of course, be carried out without departing from the scope thereof, Accordingly, to promote the progress in science and the useful arts, the invention is disclosed and is intended to be limited only by the scope of the appended claims.

## Claims

1. An improved lighting design for LCDs, comprising:
an LED module, disposed behind an LCD and comprising a plurality of LED
units mounted on a flat panel, **characterized in that** each of the LED units comprises a light-generating point, a light-transmissive hole and a light-guiding lens, wherein the light-generating points and the light-transmissive holes are disposed on the inner side of the LED module and the light-guiding lenses are disposed on the outer side of the LED module; and
a reflective prism module, comprising a plurality of prisms disposed on a base panel and behind the LED module, and each of these prisms may face and be in
alignment with a corresponding LED unit.

2. The improved lighting design for LCDs as in claim 1, wherein each of the prisms has two reflective surfaces and the light reflected by the surfaces may be perpendicular to the corresponding light-transmissive holes.

3. The improved lighting design for LCDs as in claim 1, wherein each of the light-guiding lenses has two concave surfaces, and the inner potion of each of the light-guiding lenses is embedded in the corresponding light-transmissive hole.

4. The improved lighting design for LCDs as in claim 1, wherein each of the light-generating points may be a high-brightness white-light unit.

5. The improved lighting design for LCDs as in claim 1, wherein each of the light-generating points may be a unit that emits red light, green light and blue light.

6. The improved lighting design for LCDs as in claim 1, wherein the LED units may be mounted on the flat panel in an aligned manner.

7. The improved lighting design for LCDs as in claim 1, wherein the LED units may be mounted on the flat panel in a non-aligned manner.

8. The improved lighting design for LCDs as in claim 1, wherein connective edges may be adopted on each flat panel so that two or more flat panels may be connected more securely.
